# EUROPEAN PATENT APPLICATION

(11) **EP 3 594 527 A1**
(43) Date of publication of application: **15.01.2020**
(21) Application number: 18183430.0
(22) Date of filing: 13.07.2018
(51) Int. Cl.: F16F 9/06, F16F 9/092

(54) **SHOCK ABSORBER**

(71) Applicant: Öhlins Racing AB, 194 27 Upplands Väsby (SE)
(72) Inventor: Sintorn, Torkel, 185 91 Vaxholm (SE)
(74) Representative: AWA Sweden AB

(57) **Abstract**

A first aspect therefore relates to a shock absorber providing ease of service. The shock absorber comprises a hydraulic damper and a pneumatic spring arranged e.g. around the damper. The damper comprises a cylinder, a piston arranged in said cylinder, and a piston rod attached to said piston. The piston divides the cylinder into a compression damper chamber and a rebound spring chamber. The pneumatic spring comprises a housing provided around the cylinder such that an intermediate space is formed between the housing and the cylinder. Further, the housing is provided with a first end opening through which the piston rod extends. The cylinder is provided with a second end opening through which the piston rod extends. The shock absorber is provided with an outer sealing unit configured to seal between the piston rod and the housing by the first end opening. The cylinder is provided with an inner sealing unit configured to seal between the piston rod and the cylinder by the second end opening. Also, the outer sealing unit comprises an inner sealing member and an outer sealing member together defining a liquid space between the piston rod and the housing, said liquid space comprising a sealing liquid, such as damper oil.

## Description

### TECHNICAL FIELD

The present invention relates to shock absorbers for vehicles, such as bicycles and motorcycles.

### BACKGROUND

Shock absorbers and damping systems are used for damping of the relative movement between the wheel and the chassis of a vehicle, such as a car, a motorcycle or a bicycle. A conventional shock absorber normally comprises a working cylinder filled with a damping fluid, such as hydraulic oil or gas, and a piston arranged on a piston rod movably arranged in the cylinder. The piston is further commonly arranged to divide the cylinder into a first and second working chamber and moves in the cylinder against the resistance of the fluid, which in turn causes damping fluid to move in the damping cylinder. The damper may be arranged between the vehicle chassis and the wheel to move telescopically as the vehicle travels along such that the movement of the wheel and vehicle is thus damped by the piston moving in the cylinder against the resistance of the fluid. In the specific case of a motorcycle, a bicycle, or a mountain bike, dampers may be arranged in a front fork arrangement and/or a rear wheel suspension of the motorcycle or bicycle, in either case damping impacts and vibrations with respect to the driver.

Further, shock absorbers may comprise means for controlling the damping force exerted due to the flow of fluid through the damper. Such means may include different types of valve arrangement. One common type of valve used in shock absorber is a check valve, i.e. a valve permitting a flow of fluid in one direction.

A shock absorber typically comprises a damper and a spring configured to force the damper towards its extended position such that it can function to dampen impacts over and over again. Some shock absorbers comprise coil springs whilst other shock absorbers comprise pneumatic springs. A pneumatic spring compresses a gaseous medium which is compressed at compression of the damper such that a pressure builds up within the pneumatic spring. However, a problem with shock absorbers comprising pneumatic springs is to make them small, resistant to dust and dirt, and easily serviceable.

### SUMMARY

Accordingly, it would be desirable to provide an improved shock absorber. In particular a shock absorber being easily serviceable.

A first aspect therefore relates to a shock absorber providing ease of service. The shock absorber comprises a hydraulic damper and a pneumatic spring arranged e.g. around the damper. The damper comprises a cylinder, a piston arranged in said cylinder, and a piston rod attached to said piston. The piston divides the cylinder into separate chambers, such as a compression damper chamber and a rebound spring chamber. The pneumatic spring may comprise a housing provided around the cylinder such that an intermediate space is formed between the housing and the cylinder. Further, the housing is provided with a first end opening through which the piston rod extends. Also, the cylinder may be provided with a second end opening through which the piston rod extends. The shock absorber is provided with an outer sealing unit configured to seal between the piston rod and the housing by the first end opening. The cylinder may be provided with an inner sealing unit configured to seal between the piston rod and the cylinder by the second end opening. Also, the outer sealing unit comprises an inner sealing member and an outer sealing member together defining a liquid space between the piston rod and the housing, said liquid space comprising a sealing liquid, such as damper oil. The inner sealing unit seals between the piston rod and the cylinder by the second end opening, thereby preventing gas from moving between the rebound spring chamber and the intermediate space of the pneumatic spring. The sealing liquid in the liquid space of the outer sealing unit fills the space between the piston rod and the housing such that gas cannot pass the outer sealing unit, thereby preventing gas movement between the intermediate space and surrounding air. The use of liquid reduces the sensitivity to scratches and wear of the piston rod since the liquid fills scratches thereby preventing gas to move through the scratches past the sealing unit. Thus, the outer sealing unit provides an air-to-liquid-to-gas seal. The outer sealing unit can easily be removed for service from the outside without having to disassemble the entire shock absorber. The inner sealing unit prevents gas from moving into and out of the damper during a compression stroke by sealing between the rebound damper chamber and the intermediate space of the pneumatic spring.

The intermediate space may be divided by a flexible member into a compression spring chamber and a rebound damper chamber, wherein the rebound damper chamber is fluidly connected to the compression damper chamber. At compression of the damper, damping medium is forced out of the compression damper chamber and into the rebound damper chamber. Upon compression, the rebound damper chamber expands by virtue of the flexibility of the flexible member, which in turn leads to reduction of the volume of the compression spring chamber. As the volume of the compression spring chamber decreases, the gas pressure inside the compression spring chamber increases, which in turn provides the spring action of the pneumatic spring. The flexible member thus separates gas and liquid in the pneumatic spring, such that formation of a gas-liquid-mixture is prevented. Thus, at relaxation and extension of the damper, only damping fluid is brought back from the pneumatic spring into the damper and not a mixture of gas and liquid. This makes the action of the shock absorber more predictable. Also, the flexible member contains the damping fluid such that no damping fluid may escape the shock absorber at removal of the outer sealing unit for service of the damper.

An outer head of the piston rod may be removably attached to the piston rod. After removal of the outer head of the piston rod, the inner and outer sealing members of the outer sealing unit are movable onto and off the piston rod such that service and replacement of the inner and outer sealing members can be made without tearing down the shock absorber for dismounting the piston rod from the shock absorber. This thus enables swift and easy service with only a small number of tools needed.

The outer head of the piston rod may be sized small enough to allow the inner and outer sealing members of the outer sealing unit to be moved over the outer head for assembly or service. By enabling moving of the inner and outer sealing members of the outer sealing unit over the outer head of the piston rod, service and replacement of the inner and outer sealing members can be made without tearing down the shock absorber for dismounting the piston rod from the shock absorber, thus enabling swift and easy service with only a small number of tools needed.

The housing may be provided with a cylindrical portion surrounding the piston rod, and wherein an inner end of the cylindrical portion is provided with a radially inwards extending flange. The cylindrical portion provides an abutment surface for the inner and outer sealing members. Further, the radially inwards extending flange prevents the outer sealing unit from moving into the housing. This allows for assembly of the outer sealing unit by sliding the inner and outer members of the outer sealing unit along the piston rod and pushing the into position within the cylindrical portion until it bottoms out. Thereafter, the outer sealing member may be kept in position by any suitable means, such as by threaded joint to the housing or by use of an auxiliary member attached to the housing for preventing retraction of the outer sealing member from the housing.

The inner and outer sealing members of the outer seal may be elastomer rings. The elastomer rings allow a certain degree of flexibility and can thus be press-fitted at assembly for sealing between the piston rod and the housing. Each elastomer ring may be provided with a circumferential central recess. The circumferential central recess defines a respective inner and outer flange portion of each ring for abutting the piston rod and the housing respectively. Upon increase of liquid pressure within the liquid space, for example at assembly of the outer sealing unit, the inner and outer sealing lips deform to better seal. Also, the inner and outer flanges provide for more resiliency of each ring, thus better adapting to irregularities of the surface of the piston rod and the housing.

A pressure balancing port may be formed in the outer surface of the piston rod such that a channel is formed past the inner sealing unit when the piston rod is in a specific position within the damper. This specific position may be in the extended position of the damper, or somewhere close, such that the pressure balancing recess does not interfere with the outer seal and should be arranged at a position where frequent pressure balancing occurs during normal use of the shock absorber. The passage formed allows for pressure equalization between the intermediate space of the pneumatic spring and the rebound spring chamber. This, prevents problems with what is commonly referred to as stiction, i.e. static friction. Also, it balances pressure over the piston, such that the pressure in the compression damper chamber and the rebound spring chamber are essentially equal when the damper is static in its extended position. The cylinder may be provided with an inner end cap through which the piston rod extends, and wherein the inner sealing unit is configured to seal between the inner end cap and the piston rod. The inner end cap enables use of different materials for the main cylinder wall and for the inner end cap. Further, the use of an inner end cap enables large variations in diameter of the cylinder and the piston rod simply by making the central hole in the end cap smaller or larger. Hence, one cylinder may be adapted for different piston rods by changing the end cap.

The inner end cap of the cylinder is configured to guide the inner end cap relatively the housing. Such guiding ensures alignment of the cylinder with the housing, thereby enabling easier assembly and reducing risk of mal-function due to momentum applied to the shock absorber.

The inner end cap may be provided with a guide recess for receiving the cylindrical portion of the housing such that the inner end cap is guided relatively the housing. The guide recess guides the end cap relatively the housing. Such guiding ensures alignment of the cylinder with the housing, thereby enabling easier assembly and reducing risk of mal-function due to momentum applied to the shock absorber.

The inner end cap may be provided with protrusions configured to abut the housing for guiding the inner end cap relatively the housing. The protrusions guide the inner end cap relatively the housing. Such guiding ensures alignment of the cylinder with the housing, thereby enabling easier assembly and reducing risk of mal-function due to momentum applied to the shock absorber.

The inner end cap may be provided with channels for routing gas between the compression spring chamber and the guide recess. The provision of the channels for routing gas, prevents gas pressure build-up within the recess upon assembly of the shock absorber and also makes sure that gas on the inside of the outer sealing unit has the same pressure as gas in the rest of the compression spring chamber.

The inner end cap may be configured to clamp the flexible member to the cylinder by press-fit. Such mounting of the flexible member provides a robust and gas proof attachment between flexible member and cylinder.

The shock absorber may comprise an outer end cap and a valve unit extending from the outer end cap into the cylinder, wherein the valve unit is configured to throttle fluid flow between the compression damper chamber and the rebound damper chamber of the pneumatic spring.

Also, the housing may be provided with a gas port accessible from outside the shock absorber, said gas port being in fluid communication with the compression spring chamber.

### BRIEF DESCRIPTION OF DRAWINGS

Figs. 1-8 all show a shock absorber according to a first embodiment.
Fig. 5a shows a cross-sectional view in cross-section A indicated in Fig. 3, of the damper in an outer, extended, position.
Fig. 5b shows the damper also shown in Fig. 5a, but in an inner, compressed, position.
Fig. 6 shows an enlarged detail view B as indicated in Fig. 5a, specifically focusing on the inner and outer sealing units.
Fig. 7 shows an enlarged detail view C as indicated in Fig. 5b, focusing on the inner and outer sealing units enlarged even more than in Fig. 6.
Fig. 8 shows an enlarged detail view D as indicated in Fig. 5b focusing on the fluid flow through a valve assembly of the shock absorber.

| | | | |
|---|---|---|---|
| 1 | shock absorber | 19 | outer circumferential sealing lip |
| 2 | cylinder | 20 | inner end cap |
| 3 | piston | 21 | guide recess |
| 4 | piston rod | 22 | channels |
| 5 | housing (of pneumatic spring) | 23 | outer end cap |
| 6 | intermediate space | 24 | valve unit |
| 7 | first end opening | 25 | gas port |
| 8 | second end opening | 26 | longitudinal axis |
| 9 | outer sealing unit | 27 | locking ring |
| 10 | inner sealing unit | 28 | bushing |
| 11 | inner sealing member | 29 | wiper ring |
| 12 | outer sealing member | 30 | threads |
| 13 | liquid space | 31 | pressure balancing recess |
| 14 | flexible member | C1 | compression damper chamber |
| 15 | outer head | C2 | rebound spring chamber |
| 16 | cylindrical portion of housing | C3 | rebound damper chamber |
| 17 | flange | C4 | compression spring chamber |
| 18 | inner circumferential sealing lip | | |

### DETAILED DESCRIPTION

An embodiment of a shock absorber 1 according to this disclosure will hereinafter be described with reference to the appended drawings.

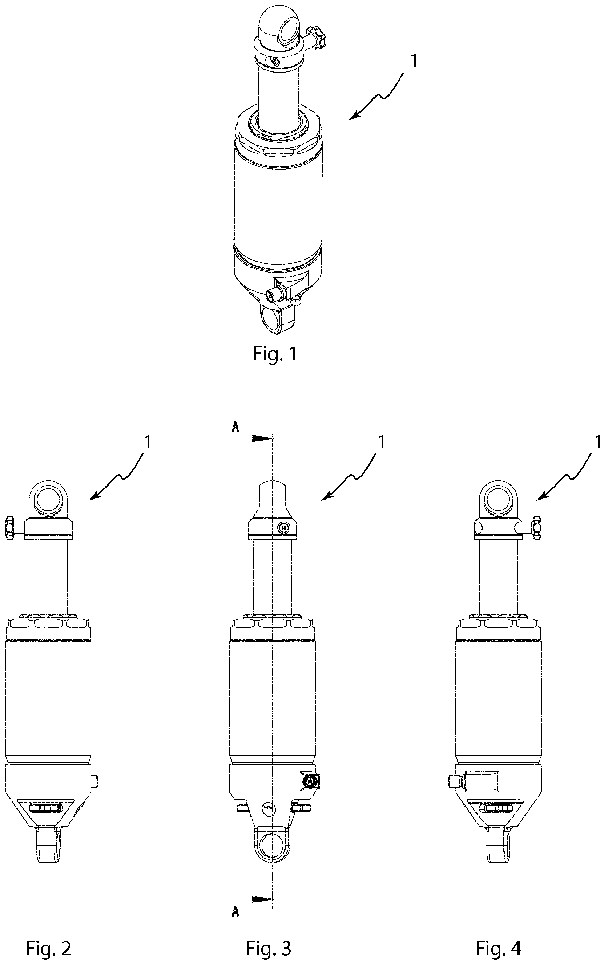

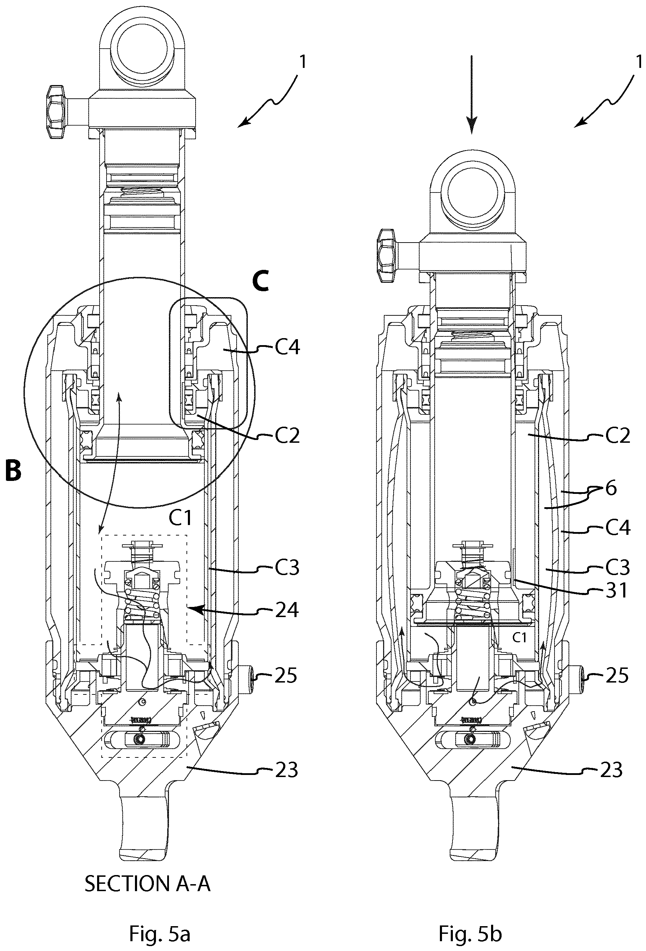

The shock absorber 1 comprises a hydraulic damper and a pneumatic spring arranged around the damper, as shown in Figs. 1-7. Within the context of this disclosure, another term for pneumatic spring is air spring. The damper comprises a cylinder 2, a piston 3 arranged in said cylinder 2, and a piston rod 4 attached to said piston 3. The piston 3 divides the cylinder 2 into a compression damper chamber C1 and a rebound spring chamber C2.

In this embodiment, the piston 3 is formed in one piece with the piston rod 4 although in other embodiments, the piston 3 and piston rod 4 may be manufactured as separate parts subsequently joined. The piston rod 4 is a cylindrical hollow member although in other embodiments, the piston rod may alternatively be some other hollow or non-hollow profile, or a solid rod, however, with a corresponding adaptation of the piston such that the piston still seals against the interior of the cylinder. An inner end portion of the piston rod 4 is provided with a circumferential recess holding a gasket for sealing between the compression damper chamber C1 and rebound spring chamber C2 of the cylinder 2, typically with oil at least in the compression damper chamber.

The pneumatic spring comprises a housing 5 provided around the cylinder 2 such that an intermediate space is formed between the housing 5 and the cylinder 2. It should be understood that 'provided around the cylinder' does not mean that the housing 5 fully encompasses the whole cylinder 2, but rather that the housing 5 radially surrounds at least a portion of the cylinder 2. By providing the housing 5 around the cylinder 2, a number of advantages are achieved. For example, a compact and robust design is achieved. Also, the housing 5 protects the cylinder 2 from dents, thereby improving reliability of the damper.

The housing 5 is provided with a first end opening 7 through which the piston rod 4 extends. Further, the cylinder 2 is provided with a second end opening 8 through which the piston rod 4 extends. The shock absorber 1 is provided with an outer sealing unit 9 configured to seal between the piston rod 4 and the housing 5 by the first end opening 7. The cylinder 2 is also provided with an inner sealing unit 10 configured to seal between the piston rod 4 and the cylinder 2 by the second end opening 8. The outer sealing unit 9 comprises an inner sealing member 11 and an outer sealing member 12 together defining a liquid space between the piston rod 4 and the housing 5, said liquid space 13 comprising a sealing liquid, such as damper oil. Alternatively, the inner 11 and outer 12 sealing members may be called first and second sealing members respectively, since the inner merely reflects that the inner sealing member 11 seals inwardly to gas in the pneumatic spring whereas the outer sealing member 12 seals outwardly towards surrounding atmosphere. In other embodiments, the inner 11 and outer 12 sealing members may alternatively be manufactured in one piece as long as they function in the same way to define the liquid space.

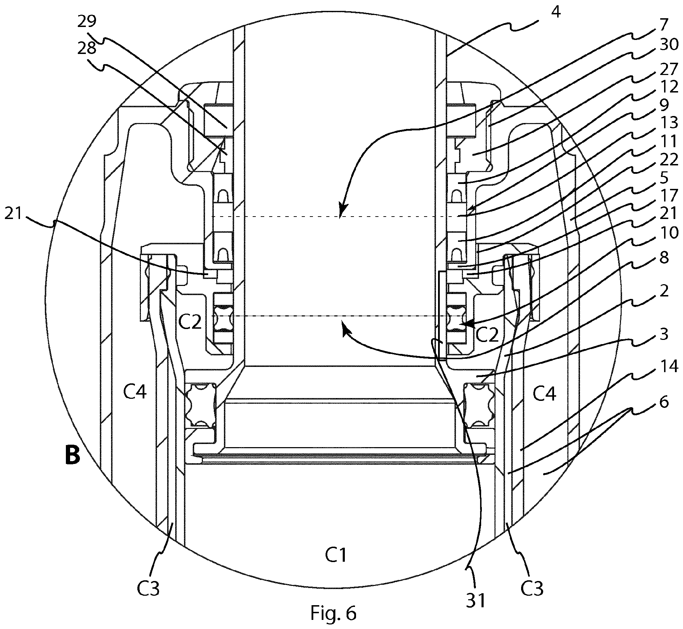

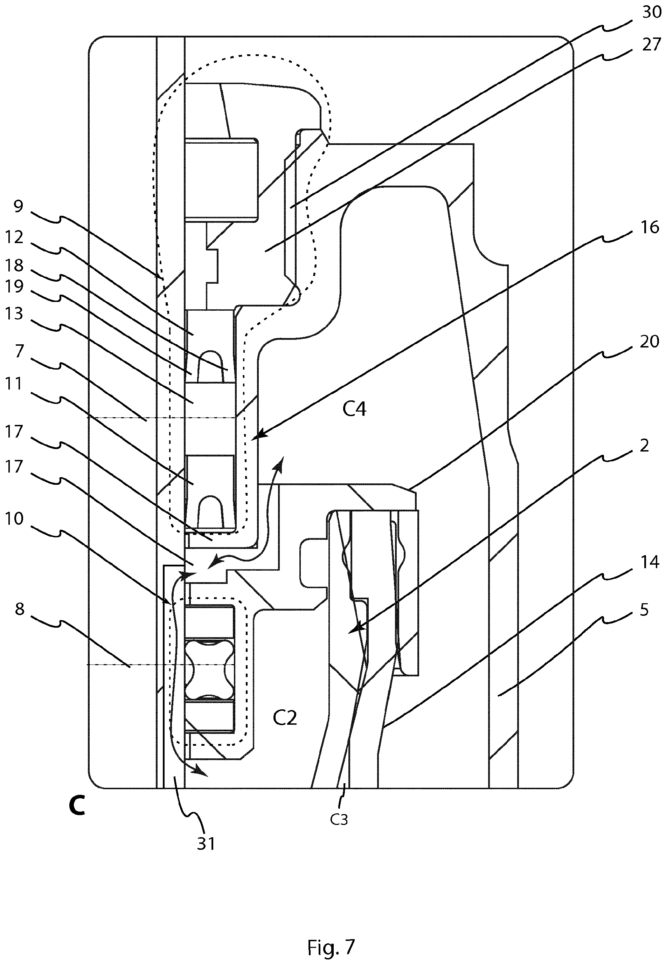

In this embodiment, the outer sealing unit 9 comprises a locking ring 27 removably attached to the housing 5 as shown in Figs. 6-7 for holding the inner 11 and outer 12 sealing members correctly positioned for use. At service, the locking ring 27 is removed from the housing 5 where after the inner 11 and outer 12 sealing members are moved out of the housing 5 for inspection and optional replacement. If the inner 11 and outer 12 sealing members are to be replaced, they can be cut off and discarded or they can be slid off the piston rod 4. Sliding sealing members onto or off the piston rod typically requires prior removal of the removable outer head 15 of the piston rod 4 unless the inner 11 and outer 12 sealing members are elastic enough to be stretched enough for being moved over the outer head 15 of the piston rod 4. The locking ring 27 is removably attached to the housing 5 by corresponding threads 30 on housing 5 and the locking ring 27 respectively. In other embodiments, the locking ring 27 may alternatively be removably joined to the housing 5 by friction or snap locking means. Further, the locking ring 27 may comprise a bushing 28 for guiding the piston rod 4 relatively the housing 5, thereby reducing wear on the inner 11 and outer 12 sealing members. The locking ring 27 not only locks the inner 12 and outer 12 sealing members but also protects the outer sealing unit 9 from dust and dirt by closely fitting with the piston rod 4 such that dust and dirt cannot pass between the piston rod 4 and the locking ring 27. Typically, such tight fit is achieved by means of a wiper ring 29, preferably provided 'outside' the bushing as shown in fig. 7, such that the extra sealing ring 29 prevents dust and dirt from reaching the bushing. At inspection and service, additional sealing liquid may be added to the liquid space 13 of the outer sealing unit 9 to compensate for sealing liquid lost or removed.

The inner sealing unit 10 seals between the piston rod 4 and the cylinder 2 by the second end opening 8, thereby preventing damping oil from moving from the rebound spring chamber C2 to the intermediate space 6 of the pneumatic spring.

The sealing liquid in the liquid space 13 of the outer sealing unit 9 at least partially fills the space between the piston rod 4 and the housing 5 such that gas cannot pass the outer sealing unit 9, thereby preventing gas movement between the intermediate space 13 and surrounding air. The use of liquid reduces the sensitivity to scratches and wear of the piston rod 4 since the liquid fills scratches thereby preventing gas to move through the scratches past the outer sealing unit 9. Thus, the outer sealing 9 unit provides an air-to-liquid-to-gas seal whilst the inner sealing unit 10 provides a gas-to-gas seal. The outer sealing unit 9 can be removed for service without any oil leaks since the inner sealing unit 10 prevents damping oil from moving from the rebound spring chamber C2 to the intermediate space 13 of the pneumatic spring.

The intermediate space 6 is divided by a flexible member 14 into a rebound damper chamber C3 and a compression spring chamber C4. The flexible member 14 is an elastomer membrane chosen to endure the forces and oil involved in the damper. The membrane is typically manufactured by injection molding but may in other embodiments be formed by an extrusion process. In other embodiments a flexible but non-elastic member 14 may be provided, such as some kind of plastic film or textile material, as long as the flexible member 14 is shaped and sized such that the size of the rebound damper chamber is variable by deformation of the flexible member 14. The rebound damper chamber C3 is fluidly connected to the compression damper chamber C1. At compression of the damper, damping medium is forced out of the compression damper chamber C1 and into the rebound damper chamber C3 of the pneumatic spring. Upon compression, the rebound damper chamber C3 expands by virtue of the flexibility of the flexible member 14, which in turn leads to reduction of the volume of the compression spring chamber C4. As the volume of the compression spring chamber C4 decreases, the gas pressure inside the compression spring chamber C4 increases, which in turn provides the spring action of the pneumatic spring. The flexible member 14 separates gas and liquid in the pneumatic spring, such that formation of a gas-liquid-mixture is prevented. Thus, at relaxation and extension of the damper, only damping fluid is brought back from the pneumatic spring into the damper and not a mixture of gas and liquid. This makes the action of the shock absorber more predictable. Also, the flexible member 14 contains the damping fluid such that no damping fluid may escape the shock absorber 1 at removal of the outer sealing unit 9 for service of the damper.

An outer head 15 of the piston rod 4 is removably attached to the piston rod 4. After removal of the outer head 15 of the piston rod, the inner 11 and outer 12 sealing members of the outer sealing unit 9 are movable onto and off the piston rod 4 such that service and replacement of the inner and outer sealing members can be made without tearing down the shock absorber for dismounting the piston rod from the shock absorber. This thus enables swift and easy service with only a small number of tools needed.

It is also possible to make the outer head 15 of the piston rod 4 to be sized small enough to allow the inner 11 and outer 12 sealing members of the outer sealing unit 9 to be moved over the outer head 15 for assembly or service. By enabling moving of the inner 11 and outer 12 sealing members of the outer sealing unit 9 over the outer head 15 of the piston rod 4, service and replacement of the inner 11 and outer 12 sealing members can be made without tearing down the shock absorber 1 for dismounting the piston rod 4 from the shock absorber, thus enabling swift and easy service with only a small number of tools needed.

As shown in Fig. 7, the housing 5 is provided with a cylindrical portion 16 surrounding the piston rod 4, and an inner end of the cylindrical portion 16 is provided with a radially inwards extending flange 17. The cylindrical portion 16 provides an abutment surface for the inner 11 and outer 12 sealing members. Further, the radially inwards extending flange 17 prevents the outer sealing unit 9 from moving into the housing 5. This allows for assembly of the outer sealing unit 9 by sliding the inner 11 and outer 12 members of the outer sealing unit 9 along the piston rod 4 and pushing the outer sealing unit 9 into position within the cylindrical portion until it bottoms onto the flange 17. Thereafter, the outer sealing member 12 may be kept in position by any suitable means, such as by the previously discussed locking ring 27 or by threads on the inner 11 and/or outer 12 sealing members engaging corresponding threads of the housing 5.

The inner 11 and outer 12 sealing members are elastomer rings, although other suitable materials could alternatively be used instead as long as they provide adequate sealing and resistance to wear and temperatures. The elastomer rings allow a certain degree of flexibility and can thus be press-fitted at assembly for sealing between the piston rod 4 and the housing 5. Each elastomer ring is provided with an inner circumferential sealing lip 18 configured to abut the piston rod 4 and an outer circumferential sealing lip 19 configured to abut the housing 5. The circumferential sealing lips 18, 19 of each ring are for abutting the piston rod 4 and the housing 5 respectively. Upon increase of liquid pressure within the liquid space, for example at assembly of the outer sealing unit 9, the inner 18 and outer 19 sealing lips deform to better seal. Also, the inner 18 and outer 19 sealing lips provide for more resiliency of each ring, thus better adapting to irregularities of the surface of the piston rod 4 and the housing 5.

The cylinder 2 is provided with an inner end cap 20 through which the piston rod 4 extends, and the inner sealing unit 10 is configured to seal between the inner end cap 20 and the piston rod 4. The inner end cap 20 enables use of different materials for the main cylinder 2 wall and for the inner end cap 20. For example, a suitable metal, such as aluminum or steel, can be used for the cylinder and a suitable plastic for the inner end cap 20. Further, the use of an inner end cap 20 enables large variations in diameter of the cylinder 2 and the piston rod 4 by making the central hole in the inner end cap 20 smaller or larger corresponding to a larger or smaller piston rod 4. Of course, change to a different-size cylinder 2 requires a corresponding change of piston 3 size. Hence, one cylinder 2 may be adapted for different piston rods 3 by changing the inner end cap 20.

The inner end cap 20 of the cylinder 2 is configured to guide the inner end cap 20 relatively the housing 5 by means of a guide recess 21 for receiving the cylindrical portion 16 of the housing 5 such that the inner end cap 20 is guided relatively the housing 5. Such guiding ensures alignment of the cylinder 2 with the housing 5, thereby enabling easier assembly and reducing risk of mal-function due to momentum applied to the shock absorber 1.

The inner end cap 20 is provided with channels 22 for routing gas between the compression spring chamber C4 and the guide recess 21.

The provision of the channels 22 for routing gas, prevents gas pressure build-up within the guide recess 21 upon assembly of the shock absorber 1 and also makes sure that gas on the inside of the outer sealing unit 9 has the same pressure as gas in the rest of the compression spring chamber C4. The inner end cap 20 is configured to clamp the flexible member 16 to the cylinder 2 by press-fit. Such mounting of the flexible member 16 provides a robust and gas proof attachment between flexible member 16 and cylinder 2. In other embodiments other means for sealingly attaching the flexible member 14 to the cylinder 2 may be provided, such as using a separate clamp in the form of a ring or by use of glue or by directly injection molding the flexible member onto the cylinder, i.e. with the cylinder positioned within the injection molding tool. The opposite end portion of the flexible member 14 may be attached to in similar fashion, as shown in the figures, to the opposite end portion of the cylinder 2 or to some other part of the shock absorber 1, may vary in other embodiments, as long as a compression spring chamber C4 and a rebound damper chamber C3 are formed.

The shock absorber 1 further comprises an outer end cap 23 and a valve unit 24 extending from the outer end cap 23 into the cylinder 2. The valve unit 24 is configured to throttle fluid flow between the compression damper chamber C1 and the rebound damper chamber C3. Thus, a fluid path is provided between the compression damper chamber C1 and the rebound damper chamber C3, through the valve and through the outer end cap 23, around the edge of the cylinder 2. In other embodiments, a fluid path may alternatively be provided through the wall of the cylinder 2 or via any other means or members defining the fluid path(s). It should be understood that several fluid paths are typically provided depending on the intended functionality of the damper, for example one path for routing oil from the cylinder to the damper, and one path for routing oil from the rebound damper chamber back to the compression damper chamber. Such separate fluid paths may by adjusted independently for throttling different fluid flows, thereby affecting the behavior of the damper.

The housing 5 and the cylinder 2 may be configured to jointly clamp a portion of the flexible member 14 between the housing the cylinder as shown in fig. 7. In other embodiments, other means for clamping the flexible member 14 may be provided, such as a separate ring or a portion of the outer end cap 23.

Further, the housing 5 is provided with a gas port 25 accessible from outside the shock absorber 1, said gas port 25 being in fluid communication with the compression spring chamber C4. The gas port 25 allows for adjustment of the gas pressure within the pneumatic spring by evacuating gas through the gas port 25, or by forcing gas into the compression spring chamber C4 through the gas port 25. Typically, the gas port 25 is provided with a commonly available valve, such as a Dunlop, Shrader or Presta-type valve, thereby enabling easy injection/venting of gas into/out of the compression spring chamber C4 using commonly available tools.

Thus, it becomes obvious for the skilled person that by means of the present invention it is possible to achieve a gas spring of a shock absorber with a number of advantages. For example, the air-to-liquid-to-gas system of the outer seal creates a sealing which maintains very good sealing properties over a long time, thus increasing drastically the service intervals. Traditional air-to-gas sealing, common in air spring shock absorbers, are rather sensitive to dirt and even the slightest particle stuck between the surface of the piston rod and a sealing member will cause quick loss of pressure in the gas spring. The present solution avoids this since there is two sealing members with a liquid filled space arranged therebetween. This is important in that it does not only provide two separate sealing members but also provides a liquid which can fill minor scratches in the surfaces of the piston rod and the sealing members, thereby minimizing pressure losses. Further, the present invention provides excellent access to the outer sealing such that when replacement is required, this can be done without having to disassemble the entire shock absorber.

## Claims

1. A shock absorber (1) comprising
a hydraulic damper; and
a pneumatic spring;
wherein the damper comprises a cylinder (2),
a piston (3) arranged in said cylinder (2), and
a piston rod (4) attached to said piston (3),
wherein the piston (3) divides the cylinder (2) into separate chambers,
wherein the pneumatic spring comprises a housing (5) provided with a first end opening (7) through which the piston rod (4) extends,
wherein the shock absorber (1) is provided with an outer sealing unit (9) configured to seal between the piston rod (4) and the housing (5) by the first end opening (7),
wherein the outer sealing unit (9) comprises an inner sealing member (11) and an outer sealing member (12) together defining a liquid space (13) between the piston rod (4) and the housing (5), said liquid space (13) comprising a sealing liquid, such as damper oil.

2. A shock absorber (1) according to claim 1, wherein an intermediate space (6) is provided between the housing (5) and the cylinder (2), said intermediate space (6) is divided by a flexible member (14) into a rebound damper chamber (C3) and a compression spring chamber (C4), and
wherein the rebound damper chamber (C3) is fluidly connected to a compression damper chamber (C1).

3. A shock absorber (1) according to any one of claims 1-2, wherein an outer head (15) of the piston rod (4) is removably attached to the piston rod (4).

4. A shock absorber (1) according to any one of claims 1-3, wherein the outer head (15) of the piston rod (4) is sized small enough to allow the inner (11) and outer (12) sealing members of the outer sealing unit (9) to be moved over the outer head (15) for assembly or service.

5. A shock absorber (1) according to any one of claims 1-4, wherein the housing (5) is provided with a cylindrical portion (16) surrounding the piston rod (4), and wherein an inner end of the cylindrical portion is provided with a radially inwards extending flange (17).

6. A shock absorber (1) according to any one of the preceding claims,
wherein the inner (11) and outer (12) sealing members are elastomer rings.

7. A shock absorber (1) according to claim 6, wherein each elastomer ring is provided with an inner circumferential sealing lip (18) configured to abut the piston rod and an outer circumferential sealing lip (19) configured to abut the housing (5).

8. A shock absorber (1) according to any one of the preceding claims,
wherein an inner sealing unit (10) is arranged to seal between the piston rod (4) and the cylinder (2) by a second end opening (8), wherein a pressure balancing port may be formed in the outer surface of the piston rod such that a channel is formed past an inner sealing unit (10), said, unit when the piston rod is in a specific position within the damper.

9. A shock absorber (1) according to any one of the preceding claims,
wherein the cylinder (2) is provided with an inner end cap (20) through which the piston rod (4) extends, and wherein the inner sealing unit (10) is configured to seal between the inner end cap (20) and the piston rod (4).

10. A shock absorber (1) according to claim 9, wherein the inner end cap (20) of the cylinder (2) is configured to guide the inner end cap (20) relatively the housing (5).

11. A shock absorber (1) according to claim 10, wherein the inner end cap (20) is provided with a guide recess (21) for receiving the cylindrical portion (16) of the housing (5) such that the inner end cap (20) is guided relatively the housing (5).

12. A shock absorber (1) according to any one of claims 10-11, wherein the inner end cap (20) is provided with protrusions configured to abut the housing (5) for guiding the inner end cap (20) relatively the housing (5).

13. A shock absorber (1) according to any one of claims 9-12, wherein the inner end cap (20) is provided with channels (22) for routing gas between the compression spring chamber (C4) and the guide recess (21).

14. A shock absorber (1) according to any one of claims 9-13, wherein the inner end cap (20) is configured to clamp the flexible member (16) to the cylinder by press-fit.

15. A shock absorber (1) according to any one of the preceding claims,
wherein the shock absorber (1) further comprises an outer end cap (23) and a valve unit (24) extending from the outer end cap (23) into the cylinder (2), wherein the valve unit (24) is configured to throttle fluid flow between the compression damper chamber (C1) and the rebound damper chamber (C3).
